# EUROPÄISCHE PATENTSCHRIFT

(11) **EP 1 561 892 B1**
(45) Veröffentlichungstag und Bekanntmachung des Hinweises auf die Patenterteilung: **24.10.2012**
(21) Anmeldenummer: 05002522.0
(22) Anmeldetag: 07.02.2005
(51) Int. Cl.: E06B 3/30, E04F 13/08, E04B 2/88, E06B 3/62, E06B 3/263

(54) **Verkleidungsanordnung für Gebäudeaussen- und/oder Innenflächen sowie für Aussen- und/oder Innenflächen von Türen, Fenstern und anderen Funktionsflächen von Gebäuden**
Cladding system for out- or inside surfaces of buildings, doors, windows and the like
Système de revêtement pour surfaces extérieures ou intérieures de bâtiments, portes, fenêtres et similaires

(30) Priorität: 06.02.2004 DE 102004006080; 22.02.2004 DE 102004008991; 13.10.2004 DE 102004049958; 15.10.2004 DE 102004050524; 15.10.2004 DE 102004050523
(43) Veröffentlichungstag der Anmeldung: 10.08.2005
(73) Patentinhaber: Eichinger Schreinerei GmbH, 94152 Neuhaus am Inn (DE)
(72) Erfinder: Die Erfindernennung liegt noch nicht vor
(74) Vertreter: Benninger, Johannes

(56) Entgegenhaltungen:
- EP-A- 0 982 464
- WO-A-01/12015
- WO-A-91/06738
- DE-A1- 1 509 860
- DE-A1- 3 812 670
- DE-A1- 10 201 060
- DE-U1- 20 216 803
- GB-A- 1 499 905
- US-A- 4 064 667

## Beschreibung

Die Erfindung betrifft eine Verkleidungsanordnung für Gebäudewände und Gebäudeaußen- und/oder Innenflächen sowie für Außen- und/oder Innenflächen von Türen, Fenstern und anderen Funktionsflächen von Gebäuden. Die Verkleidungsanordnung eignet sich beispielsweise für verglaste Gebäudewände, jedoch auch für andere Außenflächen von Gebäuden. Die Verkleidungsanordnung eignet sich darüber hinaus für alle Fenster- und Türrahmen bzw. -flächen, sowohl im Innenbereich wie auch im Außenbereich von Gebäuden. Zudem eignet sich die Verkleidungsanordnung für alle sonstigen Funktionsflächen von Gebäuden, bspw. zur flächen Gestaltung von Wänden, Türen o. dgl. im Innenbereich und/oder an der Auβenfassade.

Bei herkömmlichen verglasten Gebäudefassaden werden Glasflächen in vorbereitete Rahmen eingehängt und dort verklemmt und/oder verklebt, wonach die von außen sichtbar bleibenden Rahmenabschnitte mittels Profil-Verkleidungselementen aus Aluminium oder Edelstahl verblendet werden. Diese Verkleidungselemente werden mit den Rahmenabschnitten verschraubt, verklemmt oder verklebt. Nachteilig an diesen bekannten Verkleidungsanordnungen sind insbesondere die mangelnde Alterungsbeständigkeit, eine erhöhte Schmutzanfälligkeit und das teilweise unbefriedigende Finish, das gegebenenfalls den optischen Eindruck beeinträchtigen kann. Da die bekannten Verkleidungselemente je nach gewünschter Optik teilweise lackiert werden müssen, besteht das Risiko einer Verletzung dieser Lackschicht während der Montage bzw. bei späteren Reinigungsarbeiten an der Gebäudefassade. Auch dies kann den optischen Eindruck nachhaltig beeinträchtigen.

Als weitere Nachteile können die mangelnde Schlagfestigkeit von Aluminium sowie dessen Korrosionsanfälligkeit genannt werden. Zudem neigen Verkleidungselemente aus Aluminium und Edelstahl zur Ausbildung von Wellen, die je nach Lichteinfall an der Fassade störend sichtbar werden können.

Das Temperaturdehnungsverhalten der bekannten Verkleidungselemente kann oftmals nicht befriedigen.

Aus der WO 95/33901 ist eine Fassadenkonstruktion für Gebäude bekannt, bei der flächige Paneelen mit ihren Randabschnitten in Pfosten- und Riegelelemente verklemmt sind, wobei die Pfosten- und Riegelelemente aus T-Profilelementen, vorzugsweise aus Stahl oder einem anderen Metall, und dagegen verschraubten U-Profilelementen, vorzugsweise aus Holz oder Kunststoff, bestehen.

Die EP 0 194 779 offenbart eine Strukturanordnung für eine Vorhangwand oder dergleichen, bei der Füllungstafeln in eine Rahmenstruktur eingesetzt sind, die aus Hauptrahmen- und Hilfsrahmenelementen besteht. Die annähernd U-förmigen Hilfsrahmenelemente sind dabei mittels Schrauben und innere sowie äußere Dichtungen an den Hauptelementen befestigt und üben somit einen Anpressdruck auf die Tafeln aus. Nach außen hin sichtbar sind bei dieser Anordnung die äußeren Dichtungselemente.

Die DE 43 31 963 beschreibt eine Anordnung zur Befestigung von vorzugsweise ebenen Elementen in einem Pfosten-Riegel-System, bei der ein äußeres Bauteil über einen Einrastabschnitt an einem Pfosten mit angeformtem inneren Bauteil befestigt ist, und dabei die ebenen Elemente durch Anpressen festhält. Bei dieser Konstruktion ist keine Schraubverbindung nötig.

Die WO 01/120 15 A beschreibt eine Abdeckplatte für Möbel oder Eingangstüren mit einer Dekoroberfläche und einer erhabenen oder vertieften zentralen Verkleidungsplatte zum Verkleiden des Möbels oder der Türe.

Die GB 1 499 905 offenbart einen Rahmen für Fenster oder Türen aus Metall-Hohlprofilen, der auf einer Gebäudeinnenseite mit einem nicht metallischen und Wärme dämmenden Formstück verkleidet werden kann.

Die DE 38 12 670 A1 zeigt eine Türe für Gebäudeöffnungen, die mittels Gelenkelementen an einem Blendrahmen angeschlagen ist. Diese Türe wird durch einen Grundrahmen aus Profilelementen gebildet, an dessen Außenseiten wiederum Plattenelemente befestigt werden können.

Die US 2002/014 44 76 A zeigt weiter ein Verfahren und eine Vorrichtung zum Sichern von Verkleidungsplatten an Gebäuden, wie Keramikplatten. Hierbei wird ein Rahmen vorgeschlagen, der vorzugsweise durch Schnappverbindungen hergestellt wird und die Platten auch bei starkem Wind sicher in ihren Befestigungen hält.

Die WO 03/048 493 A1 zeigt ein Verbundprofil für Fenster- oder Türrahmen. Dort ist eine Schnappverbindung beschrieben, durch die ein äußeres und ein inneres Rahmenelement miteinander sicher und schnell verbunden werden können.

Die EP 1 321 596 A1 beschreibt schließlich ein Montagesystem zum Erstellen einer Wand. Dieses System umfasst einen Rahmen aus senkrechten C-Profilen und horizontalen U-Profilen. An Schienen, die am Rahmen befestigt werden, können Platten montiert und der Raum hinter diesen wärmegedämmt werden.

Ein Ziel der vorliegenden Erfindung wird darin gesehen, eine Verkleidungsanordnung für Gebäudewände, für Gebäudeaußen- oder Gebäudeinnenflächen sowie für sonstige Funktionsflächen eines Gebäudes wie Fenster, Türen o. dgl. zur Verfügung zu stellen, die sich durch einfache Montierbarkeit, durch mechanische Robustheit sowie durch eine kostengünstige Herstell- und Verarbeitbarkeit auszeichnet. Zudem soll mit der vorliegenden Erfindung eine Verkleidungsanordnung für Gebäudewände und Gebäudeflächen zur Verfügung gestellt werden, die den unterschiedlichsten optischen Anforderungen gerecht werden kann.

Diese Ziele der Erfindung werden mit dem Gegenstand des unabhängigen Anspruchs erreicht. Merkmale vorteilhafter Weiterbildungen der Erfindung ergeben sich aus den abhängigen Ansprüchen.

Eine erfindungsgemäße Verkleidungsanordnung für verkleidete Gebäudewände bzw. Gebäudeoberflächen, die bspw. in Pfosten-Riegel-Ständerbauweise ausgeführt sein können und bei denen bspw. Verkleidungs- bzw. Glasflächen mit ihren Randabschnitten an Pfosten verankert sein können, an deren jeweils zwischen zwei benachbarten Verkleidungs- bzw. Glasflächen angeordneten stirnseitigen Trennabschnitten jeweils ein flaches, längliches Verkleidungselement aus einem Holz- und/oder Zellstoff-Verbund-Werkstoff bzw. aus einem Keramikmaterial befestigt ist, weist den Vorteil auf, dass als Verkleidungselemente eine Vielzahl von Werkstoffen eingesetzt werden können, nicht nur Aluminium, Stahl oder Kunststoff, wie dies bei herkömmlichen Verkleidungsanordnungen üblich ist. Eine weitere erfindungsgemäße Verkleidungsanordnung für Gebäudeaußen- und -innenflächen, an denen jeweils flaches, längliches oder breiteres Verkleidungselement aus einem Holz- und/oder Zellstoff-Verbund-Werkstoff bzw. aus einem Keramikmaterial lösbar befestigt ist, weist ebenfalls den Vorteil auf, dass als Verkleidungselemente eine Vielzahl von Werkstoffen eingesetzt werden können, nicht nur Aluminium und Stahl, wie dies bei herkömmlichen Verkleidungsanordnungen üblich ist.

Die Erfindung betrifft zudem eine Verkleidungsanordnung für Gebäudeaußenflächen in Gestalt von fest verankerten, verschiebbaren und/oder schwenkbaren Gebäudeteilen wie Türen oder Fenstern o. dgl., an deren Rahmenabschnitten bzw. Außenflächen jeweils flache, insbesondere längliche Verkleidungselemente aus einem Holz- und/oder Zellstoff-Verbund-Werkstoff oder aus einem keramischen Werkstoff befestigt sind. Auch diese Verkleidungsanordnung weist den bereits genannten Vorteil auf, dass als Verkleidungselemente eine Vielzahl von Werkstoffen eingesetzt werden können, nicht nur Aluminium und Stahl, wie dies bei herkömmlichen Verkleidungsanordnungen üblich ist.

Die Verkleidungselemente können lösbar an den Trennabschnitten bzw. an den Gebäudeaußenwänden befestigt sein, bspw. mittels Schraubverbindungen oder mittels geeigneter Schnappverschlüsse. Alternativ hierzu können die Verkleidungselemente jedoch auch an ihrem vorgesehenen Montageort verklebt oder anderweitig unlösbar oder nur schwer lösbar befestigt sein.

Eine bevorzugte Ausgestaltung der Erfindung sieht vor, dass der Holz- und/oder Zellstoff-Verbund-Werkstoff, aus dem die Verkleidungselemente gefertigt sind, ein Hochdrucklaminat-Werkstoff (HPL) ist. Ein derartiger Hochdrucklaminat-Werkstoff ist bspw. unter den Markenbezeichnungen "Max Exterior®", "Trespa Meteon®" oder "Resoplan®" im Handel erhältlich. Dieser Verbundwerkstoff wird auf Basis thermohärtender Harze gefertigt, die relativ homogen verteilte Matrixstrukturen aus Holzfasern aufweisen. Alternativ können auch Matrixstrukturen aus anderen Naturfasern bzw. Naturfaserbahnen eingebracht werden. Die Herstellung erfolgt, indem dieses Gemisch unter hohem Druck und erhöhter Temperatur verpresst wird. Das erfindungsgemäße Verkleidungselement ist hierbei als massiver, nahezu porenfreier Formkörper ausgebildet, der mit herkömmlichen Holzbearbeitungsmaschinen be- und verarbeitet werden kann.

Der für das erfindungsgemäße Verkleidungselement eingesetzte Holz- und/oder Zellstoff-Verbund-Werkstoff bzw. Hochdrucklaminat-Werkstoff kann in gleicher Weise wie Holz gesägt, getrennt, verklebt und/oder geschliffen werden. Neben der guten Verarbeitbarkeit besteht dadurch zudem die Möglichkeit, entstandene Kratzer oder Verunreinigungen leicht zu beseitigen, beispielsweise durch Abschleifen. Diese Ausbesserungs- und Reparaturarbeiten können auch nach vielen Jahren, insbesondere zur Wiederaufarbeitung einer leicht verwitterten Gebäudefassade durchgeführt werden.

Die Oberfläche der erfindungsgemäßen Verkleidungselemente kann bspw. aus pigmentierten Harzen oder aus doppelt gehärteten Acryl-Polyurethan-Harzen bestehen. Diese gehärtete Oberflächenschicht sowie die nahezu porenfreie Struktur führen zu den oben genannten Vorteilen des Materials.

Die aus Holz-, Zellstoff- oder Hochdrucklaminat-Verbund-Werkstoff bestehenden Verkleidungselemente können in einfacher Weise die unterschiedlichsten optischen Effekte erhalten, da die Oberflächenschicht mit Hilfe von Farbstoffen bzw. Farbpigmente nahezu beliebig eingefärbt und/oder pigmentiert sowie ggf. mit einer Strukturierung versehen werden kann. Auch gemusterte Strukturen, bspw. in Gestalt einer Holzstruktur-Nachbildung sind problemlos möglich, so dass sich sehr vielfältige Einsatzmöglichkeiten ergeben.

Die Verkleidungselemente können jeweils mit ihrer Rückseite am Pfosten verklebt verschraubt oder verschnappt sein. Die Verkleidungselemente können alternativ jeweils mit ihren Rückseiten am Pfosten verklebt sein.

Gegebenenfalls können die Verkleidungselemente an ihrer Rückseite jeweils ein Profilelement zu lösbaren Schnappverbindung mit am Pfosten verankerten Zapfenelementen aufweisen. Hierbei ist gegebenenfalls auch eine hinterlüftete Montierbarkeit der Verkleidungselemente ermöglicht. Die Profilelemente bestehen vorzugsweise aus Metall oder aus Kunststoff, beispielsweise aus stranggepresstem Aluminiumprofil.

Die Profilelemente können insbesondere jeweils ein U-förmiges Profil aufweisen, dessen geschlossene Seite in eine damit korrespondierende Aufnahmenut auf der Rückseite der Verkleidungselemente eingepasst ist. Vorzugswiese weisen die Profilelemente zumindest an den Außenseiten ihrer Schenkelabschnitte eine Strukturierung auf, so dass sie in die Aufnahmenut eingepresst und/oder in diese verklebbar sind und aufgrund der Strukturierung sehr gut gegen unbeabsichtigtes Lösen gesichert sind.

Wenn in obigem Zusammenhang meist von "Pfosten" bzw. "Trennabschnitten" o. dgl. gesprochen wurde, an denen die Verkleidungselemente befestigt werden können, so ist dies keinesfalls einschränkend zu verstehen. Grundsätzlich eignen sich die Verkleidungselemente auch für einen Einsatz als sichtbare Gestaltungselemente an nahezu beliebigen Gebäudeaußenflächen, bspw. an Wänden, Fenstern, Türen etc. Dort können Sie wahlweise in der beschriebenen Art und Weise lösbar befestigt oder auch verklebt sein. Eine besonders zu erwähnende Möglichkeit der Verwendung ist bspw. die Außengestaltung von Gebäudetüren, an deren Außenseite ein Verkleidungselement bzw. mehrere Verkleidungselemente anbringbar sind, um eine gewünschte optische Wirkung zu erzielen. Selbstverständlich können die Verkleidungselemente auch flächig ausgebildet sein, bspw. zur optischen Verkleidung von Türen oder größeren Wandflächen. Auch sollte erwähnt sein, dass die Verkleidungselemente in gleicher Weise im Innenbereich von Gebäuden eingesetzt werden können. Eine wiederholte Erwähnung einer Einsatzmöglichkeit als Gebäudeaußenfassade ist somit in keiner Weise einschränkend zu verstehen.

Wenn zudem in obigem Zusammenhang meist von flachen, länglichen Verkleidungselementen die Rede ist, so ist dies ebenfalls nicht einschränkend zu verstehen. Grundsätzlich können die Verkleidungselemente auch größere Flächen bedecken, bspw. rechteckige, quadratische, rautenförmige o.ä. Für den Fachmann ergibt sich aus dem Zusammenhang der Beschreibung, dass die erfindungsgemäße Verkleidungsanordnung grundsätzlich eine sehr variationsreiche und nahezu beliebige Gebäudeaußengestaltung erlaubt. So kann es bspw. sinnvoll sein, Gebäudetüren mit relativ großflächigen Verkleidungselementen zu versehen, die nicht unbedingt länglich gestaltet sind, sondern bspw. relativ breit. Die längliche Form der Verkleidungselemente bezieht sich hauptsächlich auf den beschriebenen Einsatzzweck als äußere Verkleidung von Gebäudepfosten bzw. von Stützabschnitten (Pfosten-Riegel-Ständerbauweise).

Wenn im vorliegenden Zusammenhang von Verkleidungselementen die Rede ist, so sind damit grundsätzlich alle Arten von Außenfassadenelementen gemeint, die nachträglich an einer Fassade, an deren Stützträgern oder an anderen Gebäudeteilen angebracht werden können. Dies können bspw. auch Fenster oder Türen sein. Derartige Verkleidungselemente können insbesondere flach und länglich sein, so dass sie bspw. zur Pfostenverkleidung von in Pfosten-Riegel-Ständerbauweise ausgeführten Gebäuden oder Gebäudeteilen, zur Fenster- oder Türrahmenverkleidung o. dgl. eingesetzt werden können. Derartige Verkleidungselemente können jedoch auch größerflächig ausgebildet sein, so dass sie größere Fassadenflächen bedecken. Sie können grundsätzlich jede nahezu beliebige Form aufweisen, bspw. als grafische Muster oder als Flächenkunstwerke oder Reliefe ausgebildet sein.

Als Verkleidungselemente können grundsätzlich alle geeigneten Materialien verwendet werden, bspw. Holz, Kunststoff oder Metall. Zudem eignen sich als Verkleidungselemente Steinelemente jeder Art, bspw. Marmor, Granit oder mineralhaltige Kunststoffe, die eine Gesteinsoptik bieten. Darüber hinaus sind als Verkleidungselemente grundsätzlich alle Arten von witterungsbeständigen Materialien und Kunststoffen geeignet, die je nach Bedarf mit einem Überzug, bspw. einem Lack- oder einer Pulverbeschichtung oder dergleichen versehen sein können. Vorzugsweise ist zumindest die äußere Schicht des Verkleidungselementes schlagfest und witterungsbeständig. Als Material für die Verkleidungselemente eignet sich zudem ein Holz-Verbundwerkstoff, bspw. HPL.

Eine Profilschiene selbst kann wahlweise über eine oder mehrere Befestigungsbohrungen mit dem Untergrund, insbesondere mit der Gebäudewand oder der Außenfassade verschraubt sein. Wahlweise kann die Profilschiene auch an ihrer rückseitigen Befestigungsfläche wenigstens einen aus dieser herausragenden, profilierten bzw. gezackten Verankerungssteg aufweisen. Dieser Verankerungssteg weist im Profil vorzugsweise eine stirnseitige Spitze auf, dass er in eine entsprechende Ausfräsung oder Nut an der Gebäudewand bzw. am Untergrund, an dem die Profilschiene montiert werden soll, eindrückbar ist.

Der Verankerungssteg kann wahlweise durchgängig oder unterbrochen sein. Vorzugsweise erstrecken sich alle erwähnten Stege (Befestigungsstege, Anschlagstege, Verankerungssteg) über die gesamte Länge eines Halteelements bzw. einer Profilschiene. Diese kann prinzipiell eine nahezu beliebige Länge aufweisen, bspw. mehr als ein Meter. Die typische Breite der Profilschiene kann von wenigen Millimetern bis zu mehreren Zentimetern betragen, je nachdem welche Dimensionierung die zu montierenden Verkleidungselemente aufweisen.

Vorzugsweise besteht die Profilschiene aus stranggepresstem Material, insbesondere aus Aluminium bzw. einer Aluminiumlegierung. Gegebenenfalls kann die Profilschiene auch aus Edelstahl, aus einem anderen Metall wie bspw. Messing bestehen. Als Material für die Schiene eignet sich auch Kunststoff bzw. ein Verbundmaterial, bestehend aus Kunststoff und einer Verstärkungsfaser oder Füllstoffe.

Die erfindungsgemäße Verkleidungsanordnung eignet sich insbesondere zum Einsatz in einem Auβenbereich; gemäß einer weiteren erfindungsgemäßen Variante umfasst sie wenigstens das Verkleidungselement, das als Trägerelement zur Befestigung an einem zu verkleidenden Objekt fungiert, wenigstens ein an dem Trägerelement angeordnetes Kantenelement, welches das Trägerelement zumindest teilweise umfasst, und wenigstens ein an einer Außenseite der Verkleidungsanordnung angeordnetes Dekorelement. Das wenigstens ein Trägerelement und/oder wenigstens ein Kantenelement weist eine Vorrichtung zur lösbaren Befestigung des wenigstens einen Dekorelements auf.

Eine bevorzugte Ausgestaltung der Erfindung sieht vor, dass jeweils ein Kantenelement an jeder der beiden Längsseiten des Trägerelements angeordnet ist und die Längskanten des Trägerelements umfasst. Gemäß einer weiteren Ausgestaltung der Erfindung umfasst das wenigstens ein Kantenelement die Längsseiten des Trägerelements sowie die Längsseiten des an der Auβenseite des Trägerelements angeordneten Dekorelements. Das wenigstens eine Kantenelement kann auf das wenigstens eine Trägerelement aufsteckbar sein.

Das Trägerelement und/oder das Kantenelement sind vorzugsweise aus stranggepresstem Metall, insbesondere aus Leichtmetall, bspw. einer Al-Legierung, gefertigt. Das Deckprofil kann insbesondere aus Holz, aus einem Holz-Verbundwerkstoff, aus einem Mineral-Verbundwerkstoff, aus Kunststoff o. dgl. bestehen. Besonders geeignet für das Deckprofil ist ein HPL-Werkstoff (HochdruckLaminat-Verbundwerkstoff), da dieser unter anderem die folgenden vorteilhaften Eigenschaften aufweist, die ihn zur Verwendung als Fassadenelement für Gebäude sehr geeignet macht. Der HPL-Werkstoff weist eine sehr geringe Längenausdehnung von 0,8 mm/m auf (vgl. Al: 2,4 mm/m). Er weist eine hohe Beständigkeit gegen Feuchtigkeit auf, ist beständig gegen Fäulnis und Verrottung, ist zudem beständig gegen UV-Strahlung und beständig gegen starke Temperaturschwankungen. Weiterhin ist der Werkstoff sehr schlag- und stoßfest und weist eine sehr hohe chemische Resistenz auf.

Grundsätzlich geeignet als Trägerelement bzw. Trägerprofil ist darüber hinaus jedes für den Außenbereich geeignete Material wie bspw. Aluminium bzw. eine geeignete Aluminiumlegierung, HPL-Werkstoffe bzw. Trespa Meteon, Edelstahl, Kunststoff, Purenit (= Polyurethan /PUR/PIR-Hartschaumbasis), Faserplatten (z.B. Fasalex = natürliche Fasern, Bindemittel, zB Mais), Polypropylen, Polyethylen, V100 Platten (wasserfeste Spanplatten), Plexiglas, Holz, Siebdruckplatten, Metall, etc.

Das Kantenelement bzw. das Kantenprofil kann insbesondere aus einer Aluminiumlegierung F25 gefertigt sein, da dieses Material um ca. 30 % härter bzw. zäher als herkömmliches Aluminium ist. Es lässt sich aber noch mit Hartmetallwerkzeugen verarbeiten, wie normales Aluminium. Darüber hinaus eignet sich als Kantenprofil normales Aluminium bzw. -legierung, Edelstahl, Kunststoff, Bronze, Messing, Chrom, Polymerwerkstoffe etc.

Das auf das Trägerprofil aufgeschobene bzw. aufgesetzte und mittels der Kantelemente gehaltene Dekorelement kann insbesondere aus Laminam bestehen, was folgende Vorteile hat: Laminam hat den mit Abstand geringsten Temperaturdehnungskoeffizienten aller im Fenster-, Fassaden- und Wintergartenbau eingesetzten Materialien. Die Porzellankeramik (Laminam) ist absolut kratzfest und härter als Granit oder Quarz. Laminam ist zudem lebensmittelecht, säurebeständig, fleckenunempfindlich, recyclebar, nicht brennbar und UV-beständig.

Darüber hinaus eignen sich als Dekorelemente grundsätzlich alle für den Außenbereich geeignete Materialien wie bspw. HPL-Werkstoffe, Fassadenplatten, z.B. "Max Exterior" (Handelsname), Porzellan, Porzellankeramik (z.B. Laminam), Keramik, Mineralwerkstoffe, z.B. "Cristilate" (Quarzsand ca. 80 %, Farbpigmente ca. 5 %, Acryl ca. 15 %) oder "CeasarStone" von LG Hi-Macs, Verbundwerkstoffe aus ca. 2/3 natürlichen Mineralien und ca. 1/3 aus Acrylpolymer oder Polyester (z.B. "Corian" = Acrylgebunden, "Varicor" = Polyestergebunden), Kompositwerkstoffe (z.B. Cristalan), Edelstahl, Aluminium bzw. -legierungen, Glas (Mineral-, Kunststoff-), Plexiglas, Bronze, Kunststein, Stein, Granit, Marmor, Kunststoffe, Schichtstoffplatten, Holz, Laminate, Kupfer, Titan, Polymerwerkstoffe, Eisen, Stahl, PVC, Purenit (= Polyurethan /PUR/PIR-Hartschaumbasis), Fasalex (= natürliche Fasern, Bindemittel wie bspw. Mais, Polypropylen), Polyethylen, Furnierplatten, Steinzeug etc.

Zusammenfassend ergeben sich u.a. die folgenden vorteilhaften Aspekte der Erfindung. Es werden sehr robuste und alterungsbeständige Fassadenelemente für den Innen- und Außenbereich zur Verfügung gestellt. Als besonders geeignetes Material für die sichtbaren Teile der Verkleidungselemente hat sich dabei sog. Porzellankeramik herausgestellt, ein sehr hoch verdichtetes, sehr homogenes und dabei relativ leichtes Material, das ein geringeres spezifisches Gewicht als Aluminium aufweist. Die erfindungsgemäßen Verkleidungen, die sich bspw. für Pfosten-Riegel-Konstruktionen eignen, sichern zudem einen geringen Wärmeübergang zwischen Tragkonstruktion und Deckprofil; die Dämmeigenschaften des Rahmenanteils werden somit erheblich verbessert.

Die vorteilhaften Eigenschaften dieser äußerst kratzfesten Oberfläche der Porzellankeramik sichern eine optimale Witterungs-, Hitze-, Feuer- und Frostbeständigkeit, eine hohe Chemikalienbeständigkeit. Zudem ist das Material massiv, schlagfest und weist eine sehr hohe Formbeständigkeit auf, so dass auch nach mehreren Jahren keinerlei Wellungen oder Verwerfungseffekte auftreten. Die sehr geringe lineare Wärmeausdehnung reduziert Relativbewegungen.

Viele dieser Eigenschaften treffen in gleicher Weise auch auf Verkleidungselemente aus Kunststoff zu, die eine Kunstharzoberfläche aufweisen. Prinzipiell können die Breiten und Dicken der Verkleidungs- und Dekorelemente in sehr weiten Grenzen variiert werden. Auch verschiedene Glasstärken können problemlos verwendet werden. Es sind sowohl Nass- wie auch Trockenverglasungen möglich. Die Verkleidungsanordnung ermöglicht eine optimierte thermische Trennung zwischen Deckschale und Tragkonstruktion. Die Befestigung ist unsichtbar, kann jedoch bei Bedarf auch von auβen sichtbar sein.

Die Erfindung wird nachfolgend anhand bevorzugter Ausführungsbeispiele unter Bezugnahme auf die beiliegenden Zeichnungen näher erläutert. Dabei zeigen die:

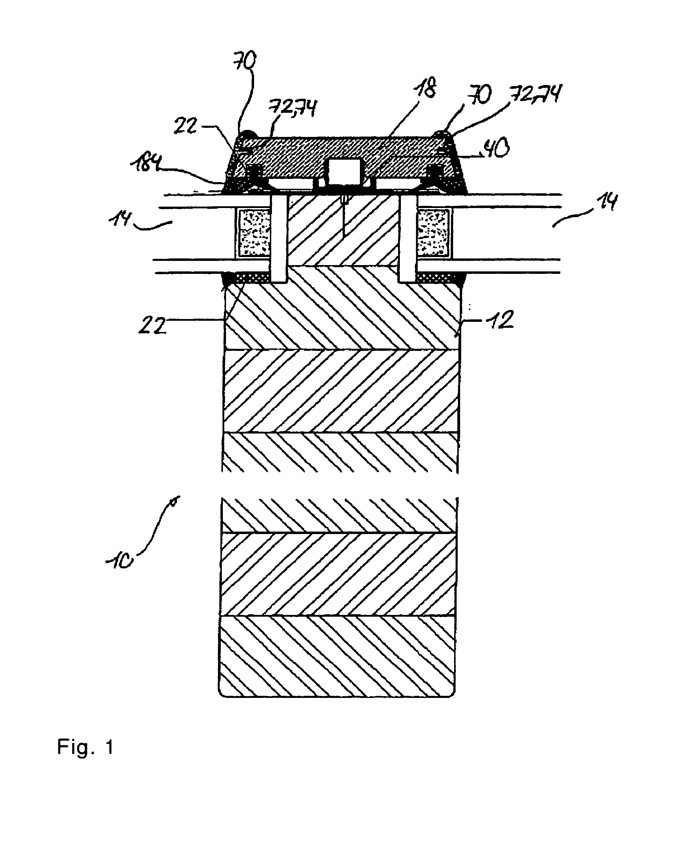

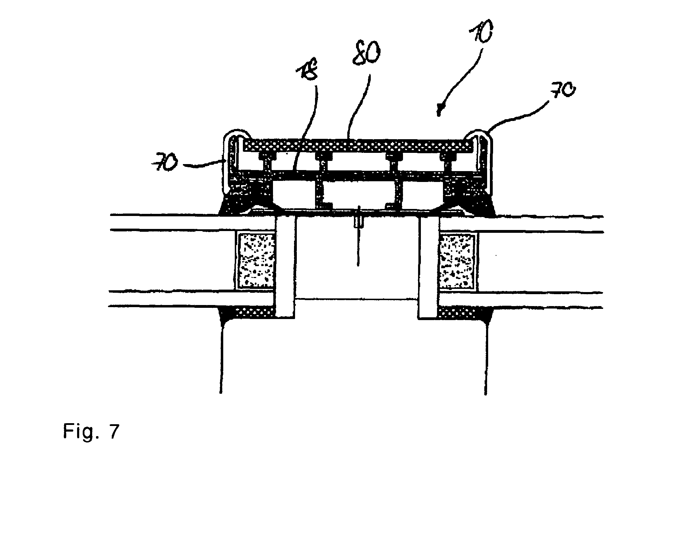

Die Figuren 1 bis 13 zeigen schematischen Schnittansichten einer Verkleidungsanordnung, bei der Schmalseiten eines Verkleidungselements mit Kantenelementen verkleidet und/oder eine Frontseite mit einem Dekorelement abgedeckt sind. Hierbei zeigt Figur 7 ein Ausführungsbeispiel der erfindungsgemäßen Verkleidungsanordnung. Die Figuren 1 bis 6 sowie 8 bis 13 betreffen keine erfindungsgemäße Ausführungsform und dienen lediglich zur Verdeutlichung.

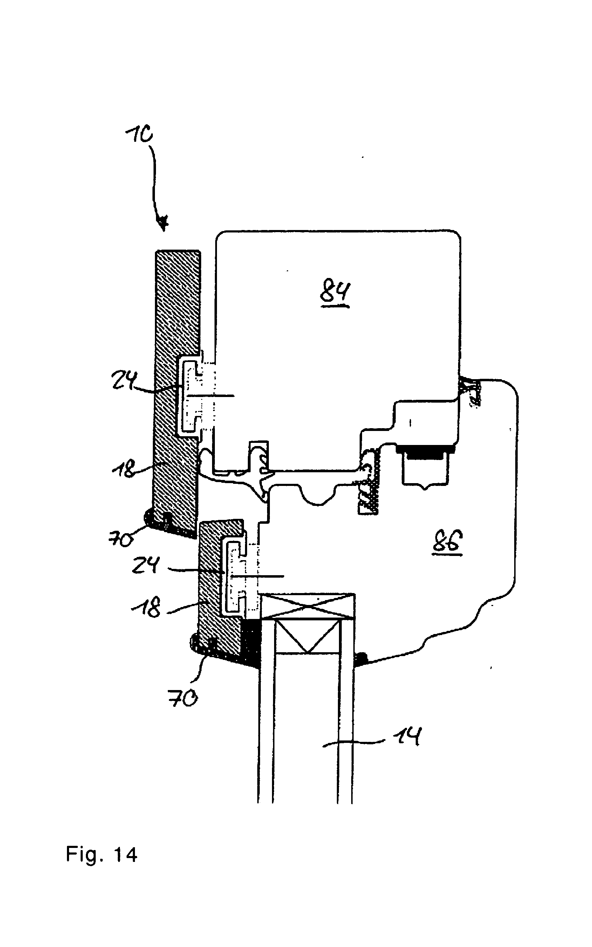

Die Figuren 14 bis 20 zeigen schematische Schnittansichten von Verkleidungsanordnungen, bei denen starre oder schwenkbare Rahmenelemente von Türen oder Fenstern o. dgl. mittels Verkleidungselementen abgedeckt sind, an deren Schmalseiten jeweils zusätzliche Kantenprofile angebracht sind. Die Figuren 14 bis 20 betreffen keine erfindungsgemäße Ausführungsform und dienen lediglich zur Verdeutlichung.

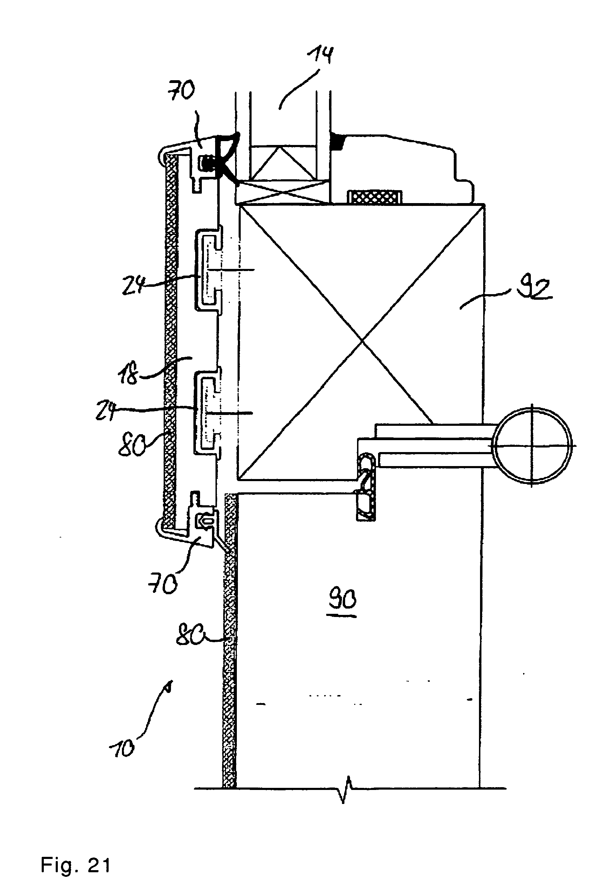

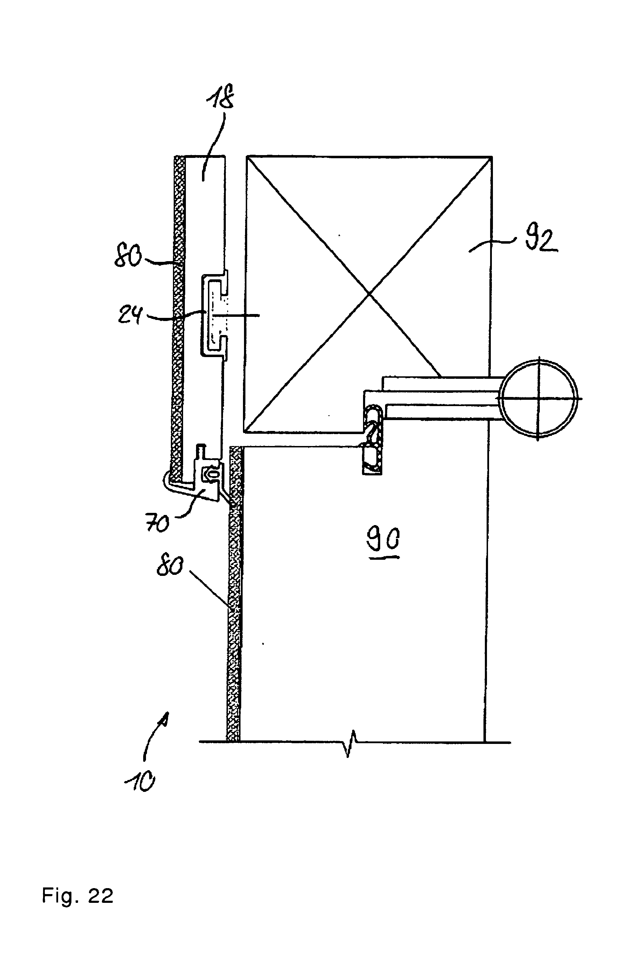

Die Figuren 21 bis 22 zeigen schematische Schnittansichten von weiteren Ausführungsvarianten, bei denen jeweils Verkleidungselemente an Rahmen von schwenkbaren Türen bzw. Fenstertüren angeordnet sind. Die Figuren 21 und 22 betreffen keine erfindungsgemäße Ausführungsform und dienen lediglich zur Verdeutlichung.

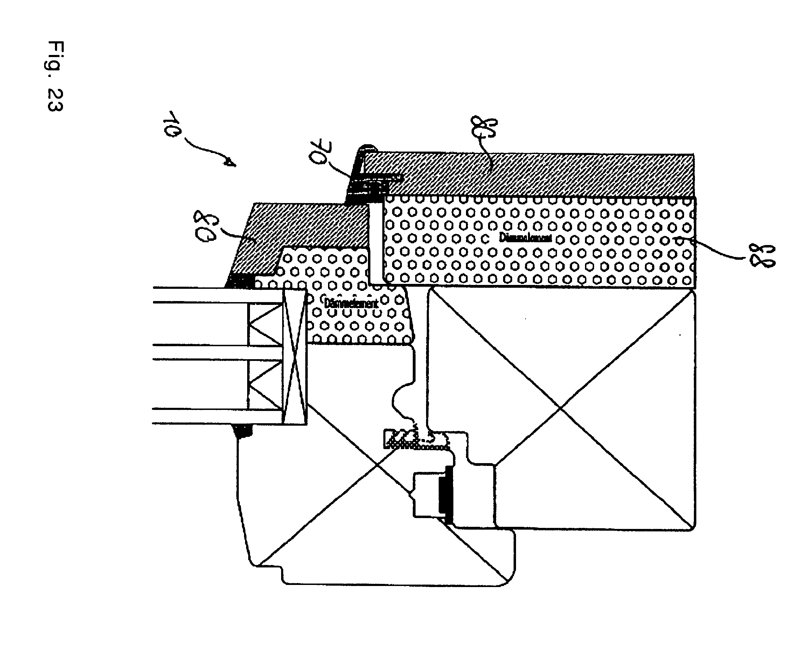

Die Figuren 23 bis 25 zeigen schematische Schnittansichten von alternativen Varianten von Verkleidungsanordnungen für Gebäudefassaden, die in Pfosten-Riegel-Ständerbauweise ausgebildet sind. Die Figuren 23 bis 25 betreffen keine erfindungsgemäße Ausführungsform und dienen lediglich zur Verdeutlichung.

Die nachfolgend anhand der Figuren 1 bis 25 beschriebenen Ausführungsbeispiele sind keinesfalls einschränkend zu verstehen. Neben der erwähnten und beschriebenen Anwendungsmöglichkeit der Außenfassadengestaltung von Gebäuden in Pfosten-Riegel-Ständerbauweise können die erfindungsgemäßen Verkleidungselemente auch zur flächigen Verkleidung von Au βenfassaden nahezu beliebiger Art eingesetzt werden, bspw. zur Wandgestaltung, zur Verkleidung von Türen, Fenstern o. dgl.

Gleiche Teile in den Figuren 1 bis 25 sind mit gleichen Bezugszeichen versehen und werden teilweise nicht mehrfach erläutert.

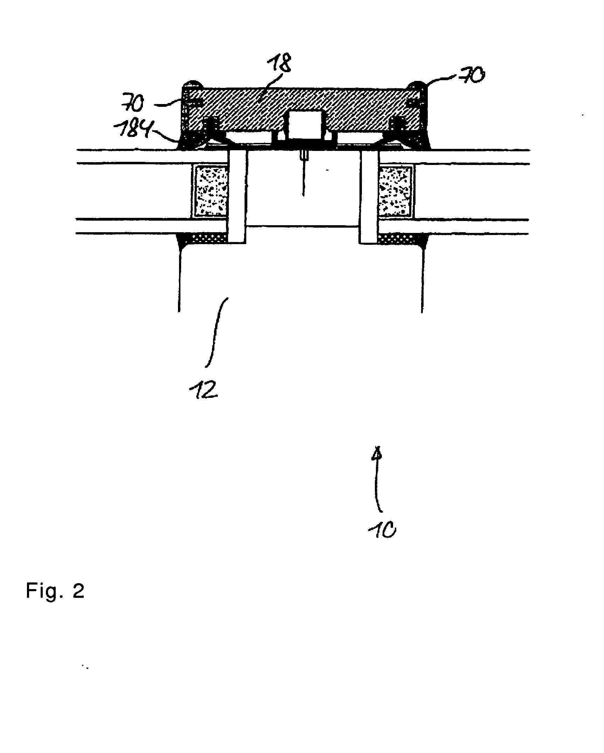

Die Fig. 1 verdeutlicht eine schematische Schnittdarstellung einer Verkleidungsanordnung 10, bei der an den beiden Schmalseiten des mittels einer Profilschiene 40 an einem Pfosten 12 eines Gebäudes lösbar befestigten Verkleidungselements 18 jeweils Kantenprofile 70 angebracht sind, die an ihren nach vorne weisenden Stirnseiten eine leichte Wölbung aufweisen, welche jeweils die Seitenkanten der Frontseite des Verkleidungselements 18 abdecken und teilweise umgreifen. Die Kantenprofile 70 decken die seitlichen Schmalseiten des Verkleidungselements 18 vollständig ab und können wahlweise geneigt (entsprechend Fig. 1) oder rechtwinkelig zur Frontseite des Verkleidungselements 18 (vgl. Fig. 2) angeordnet sein.

Die schematische Darstellung der Fig. 1 verdeutlicht eine Variante mit leicht geneigten Kantenprofilen 70, die wahlweise aus Metall, bspw. aus stranggepresstem Leichtmetall, oder aus Kunststoff bestehen können. Darüber hinaus eignet sich auch Keramik, Holz oder ein andere Material zur Verwendung als Kantenprofil. Die Befestigung der Kantenprofile 70 an den Schmalseiten der Profilelemente 18 kann auf die gezeigte Weise mittels einer Pressverbindung erfolgen, bei der jeweils ein Längssteg 72 an der Rückseite des Kantenprofils 70 in eine entsprechend passende Längsnut 74 an der Schmalseite des Profilelements 18 eingreift und unter mehr oder weniger leichtem Druck eingefügt werden kann, so dass das Kantenprofil 70 nur unter erhöhter Krafteinwirkung von seinem Montageort wieder entfernt werden kann. Diese Haltekraft des montierten Kantenelements 70 kann ggf. durch eine Profilierung des Längsstegs 72 an seinen gegenüber liegenden Seitenflächen verstärkt werden. Diese Profilierung kann bspw. gezackt oder dreieckförmig ausgebildet sein, um einen Widerhakeneffekt zu erzeugen. Das Profilelement 70 kann somit leichter aufgeschoben, jedoch nur unter erhöhtem Kraftaufwand wieder entfernt werden.

Die Glasscheiben 14 können vorzugsweise mittels einer Federscheibe 22 o. dgl. gehalten sein, die zusammen mit der Profilschiene 40 am Pfosten 12 befestigt ist.

Die in Fig. 2 gezeigte Variante unterscheidet sich von der Variante entsprechend Fig. 1 lediglich in der Gestaltung der Kantenprofile 70, deren Außenflächen annähernd senkrecht zur Frontseite des Verkleidungselements 18 orientiert sind. Ihre Breite entspricht vorzugsweise der Breite der Schmalseiten des Verkleidungselements 18, so dass diese vollständig von den Kantenprofilen 70 abgedeckt sind.

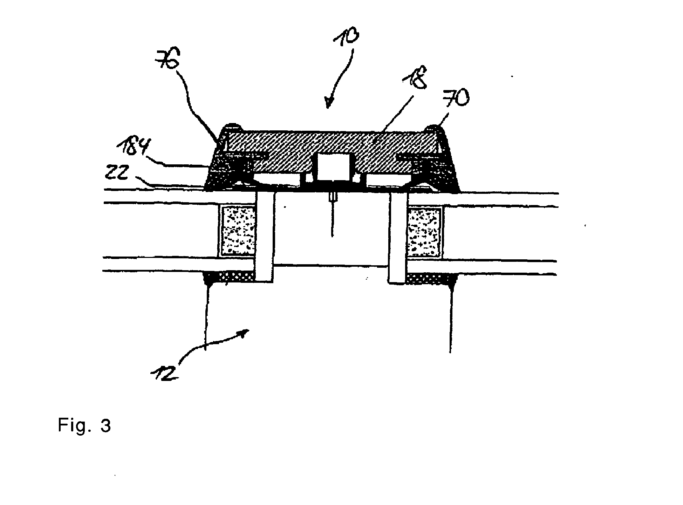

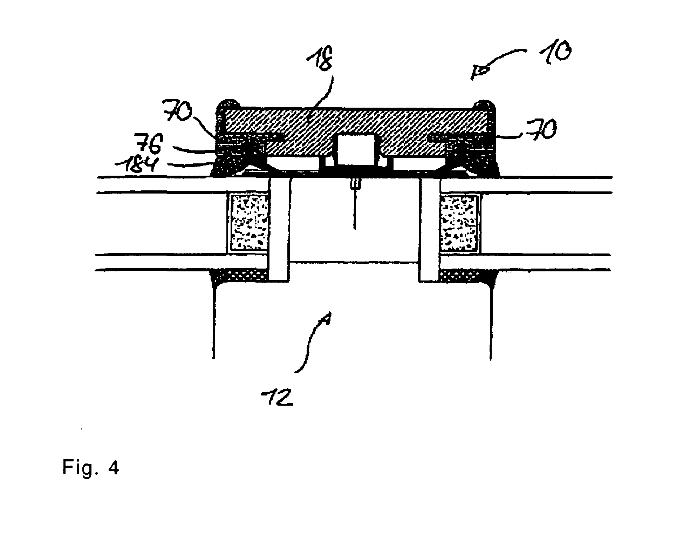

Die Figuren 3 und 4 zeigen in schematischen Schnittdarstellungen alternative Varianten der Verkleidungsanordnung 10, bei denen jeweils die Dichtleisten 184 nicht in entsprechende Nuten 186 an der Rückseite 182 des Verkleidungselements 18 eingesetzt sind, sondern in hierfür vorgesehene Klemmnuten 76 an den Rückseiten der Kantenprofile 70. Diese sind hierbei so gestaltet, dass für diese Klemmnut 76 jeweils ausreichend Platz verbleibt, weshalb die Kantenprofile 70 an ihrer Rückseite jeweils stärker ausgeführt sind. Die Verkleidungselemente 18 benötigen bei diesen Varianten jeweils eine passende Profilierung bzw. Ausfräsung, um für die voluminöseren Kantenelemente 70 den benötigten Platz zu schaffen.

Die Variante der Fig. 3 zeigt wiederum geneigte Kantenprofile 70, wodurch ein im Profil trapezförmiges Verkleidungselement 18 gebildet ist. Die Fig. 4 zeigt Kantenprofile 70 mit rechtwinkelig zur Frontseite des Verkleidungselements 18 orientierten Außenflächen, wodurch ein insgesamt quaderförmiges Verkleidungselement 18 gebildet wird.

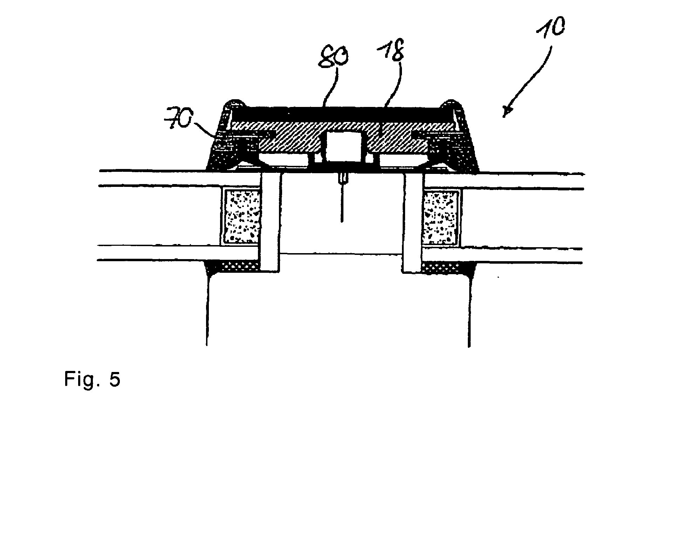

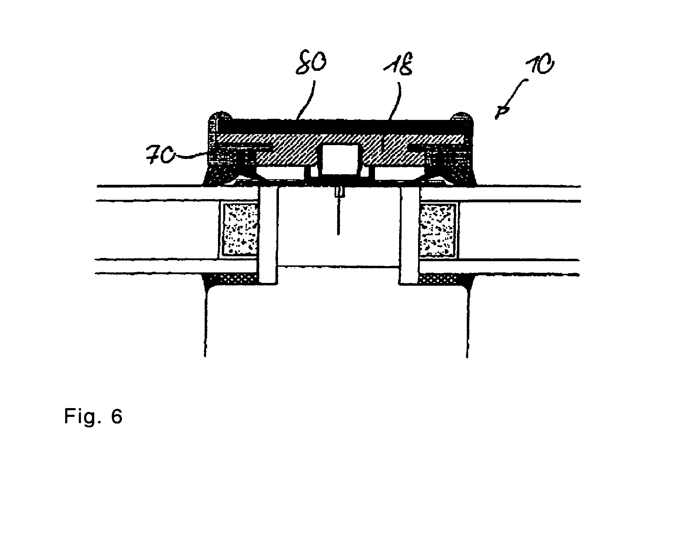

Die Figuren 5 und 6 zeigen eine weitere Variante der Verkleidungsanordnung 10, bei der die Frontseite des Verkleidungselements 18 mittels eines zusätzlichen flachen Dekorelements 80 abgedeckt ist. Das Dekorelement 80 weist annähernd die Breite des Verkleidungselements 18 auf und wird vorzugsweise von den Kantenprofilen 70 gehalten und fixiert, deren hakenförmiges Profil bei dieser Variante nicht nur die Frontseite des Verkleidungselements 18 bündig umgreift, sondern ausreichend Raum zum Einfügen bzw. Einschieben des Dekorelements 80 lässt.

Das Dekorelement 80 kann grundsätzlich aus allen denkbaren Materialien bestehen, die wahlweise eine Oberflächenstrukturierung bzw. eine definierte Oberflächenrauheit und/oder eine Beschichtung, bspw. in Form einer Lackierung o. dgl. aufweisen können. Das Dekorelement 80 kann bspw. aus Metall, Kunststoff, Keramik, Holz, Stein oder aus nahezu beliebigen anderen Materialen oder Materialzusammensetzungen bestehen, die eine ausreichende Alterungs- und Witterungsbeständigkeit für den Außenbereich von Gebäuden aufweisen. Vorzugsweise werden Materialien mit geringem Temperaturdehnungsverhalten eingesetzt. Allerdings kann problemlos auch Aluminium oder Kunststoff mit ausgeprägter Temperaturausdehnung verwendet werden, da die Klemmverbindung mittels der Kantenprofile 70 eine Relatiwerschiebung des Dekorelements 80 und des Verkleidungselements 18 bzw. der Kantenprofile 70 ermöglicht.

Der übrige Aufbau der in den Figuren 5 und 6 gezeigten Variante entspricht weitgehend der Variante gemäß der Figuren 3 bzw. 4, wobei die Variante gemäß Fig. 5 Kantenprofile 70 mit geneigten Seitenflächen zeigt, während die Variante gemäß Fig. 6 Kantenprofile 70 mit rechtwinkelig zur Frontseite des Verkleidungselements 18 bzw. des Dekorelements 80 orientierten Außenflächen zeigt.

Die nachfolgend erläuterten Figuren 7 bis 13 zeigen weitere Varianten einer alternativen Ausgestaltung der Verkleidungsanordnung 10, bei der die Kanten- bzw. Profilelemente 70 teilweise eine tragende Funktion für das daran befestigte Dekorelement 80 übernehmen, so beispielsweise bei den Varianten gemäß Fig. 8, gemäß Fig. 9, Fig. 10, Fig. 11, Fig. 12 und Fig. 13. Das einstückig ausgebildete Kantenelement 70 umgreift hierbei die gesamte Frontseite des Verkleidungselements 18 und fungiert gleichzeitig als Tragrahmen für das daran angeordnete Dekorelement 80.

Die erfindungsgemaße Variante gemäß Fig. 7 zeigt ein stark profiliertes Verkleidungselement 18, das nicht geeignet ist, ohne Kantenelemente 70 und ohne Dekorelement 80 Verwendung zu finden. Die Kantenprofile 70 sind mittels federnder Haltestege an entsprechend geformten Seitenkanten des Verkleidungselements 18 gehalten. Das Dekorelement 80 ist zwischen frontseitigen Profilstegen des Verkleidungselements 18 und den seitlichen Kantenprofilen 70 gehalten, wie dies auch bei den zuvor beschriebenen Varianten der Fall ist.

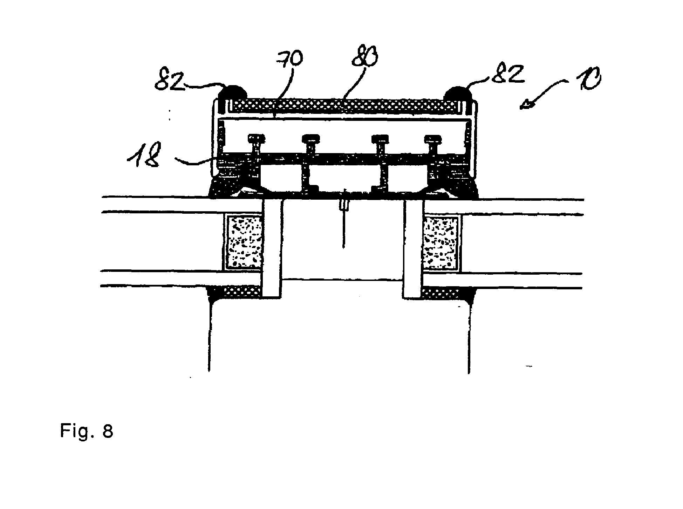

Dagegen zeigt Fig. 8 eine Variante der Verkleidungsanordnung, bei der das Kantenelement 70 einstückig ausgebildet ist und als flächige Unterlage für das flache Dekorelement 80 fungiert. Das kastenförmige Kantenelement 70 umgreift das Verkleidungselement 18 bis zu dessen Schmalseiten vollständig, so dass es im montierten Zustang unsichtbar bleibt. Die Gestaltung des Kantenelements 70 kann variieren. So ist bspw. bei der Variante der Fig. 8 eine Klemmung des Dekorelements 80 mittels zusätzlicher Klemmleisten 82 vorgesehen, die frontseitig im Kantenelement 70 eingeklemmt sind und auf diese Weise das Dekorelement 80 an seinem Platz halten. Die Klemmleisten 82 können bspw. in der gezeigten Weise in entsprechende Nuten an der Frontseite des Kantenelements 70 eingedrückt oder auf andere Weise befestigt sein, so dass sie von vorne sichtbar bleiben und eine zusätzliche Dekorfunktion erfüllen können.

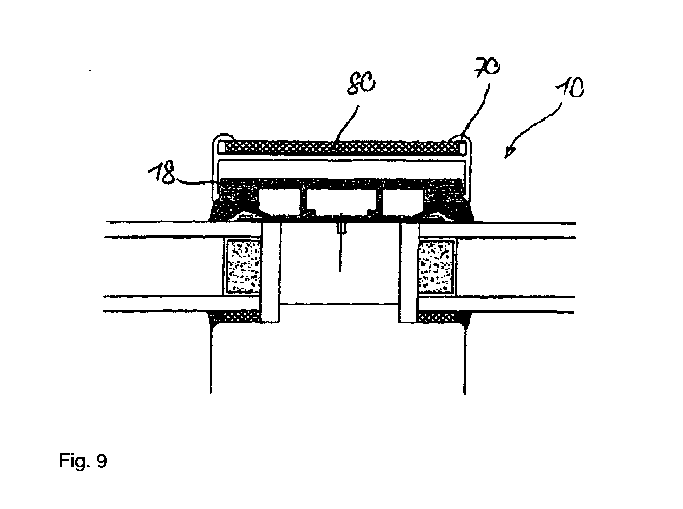

Die Fig. 9 zeigt eine einfachere Variante, bei der die zusätzlichen Klemmleisten entsprechend Fig. 8 entfallen. Das Dekorelement 80 ist mittels entsprechender Gestaltung des Kantenelements 70 gehalten, dessen seitliche Stege an der Frontseite so gestaltet sind, dass sie das Dekorelement 80 an den Seitenkanten frontseitig umgreifen und auf diese Weise am Kantenelement 70 halten. Die Montage des Dekorelements 80 am Kantenelement 70 erfolgt bei dieser Variante durch Einschieben in Längsrichtung des Verkleidungselements 18 bzw. des Kantenelements 70 und des Dekorelements 80.

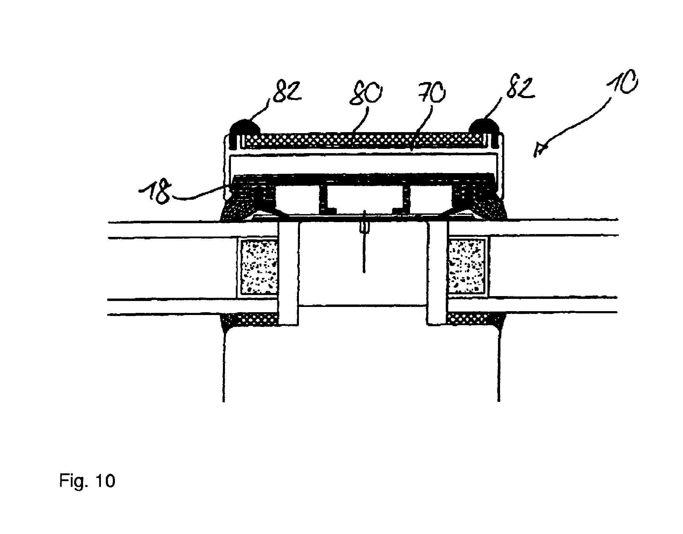

Die Variante der Fig. 10 ähnelt stark der Variante gemäß 8, wobei lediglich die Profilierung des Verkleidungselements 18 anders gestaltet ist. Die Frontseite des Verkleidungselements 18 ist hierbei glattflächig gestaltet, so dass ein Abstand zwischen Frontseite des Verkleidungselements 18 und Rückseite des Kantenelements 70 verbleibt. Die Klemmung des Kantenelements 70 erfolgt durch hakenförmige Profilierung der seitlichen Stege des Kantenelements 70, die in entsprechende kerbenförmige oder nutartige Profilierungen an den Schmalseiten des Verkleidungselements 18 eingreifen.

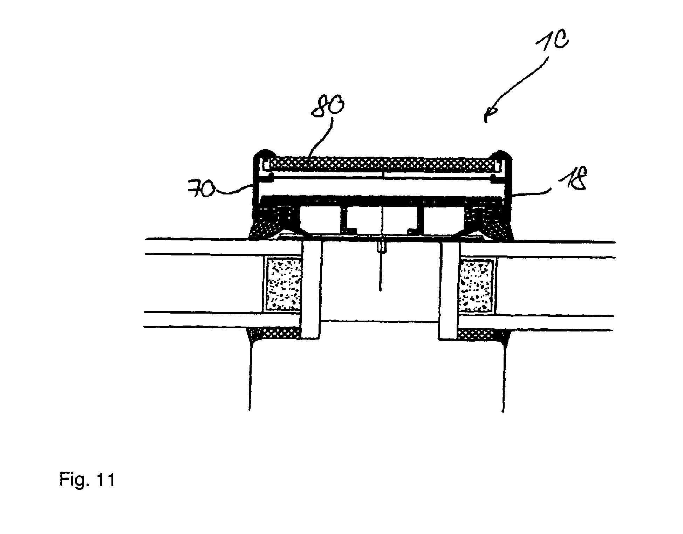

Die Variante der Fig. 11 sieht eine Klemmung des Dekorelements 80 mittels entsprechend geformter Haltestege des Kantenelements 70 vor, während die Befestigung des Kantenelements 70 am Verkleidungselement 18 auf gleiche Weise wie bei der Variante gemäß Fig. 10 erfolgt.

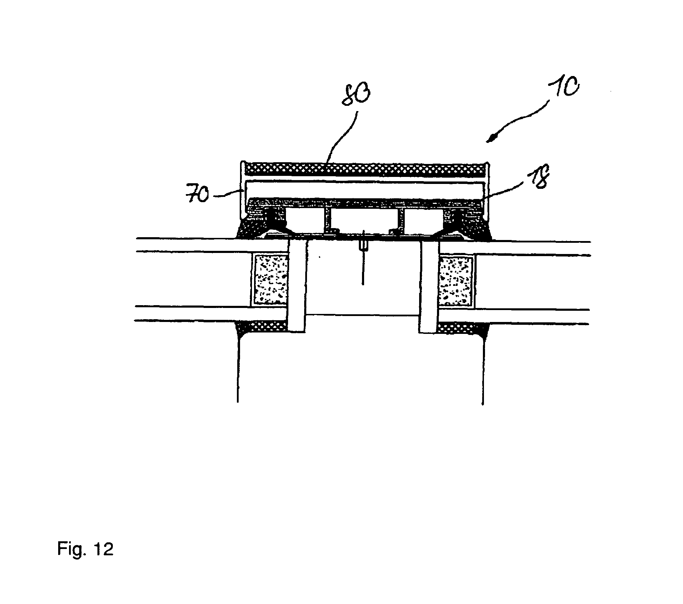

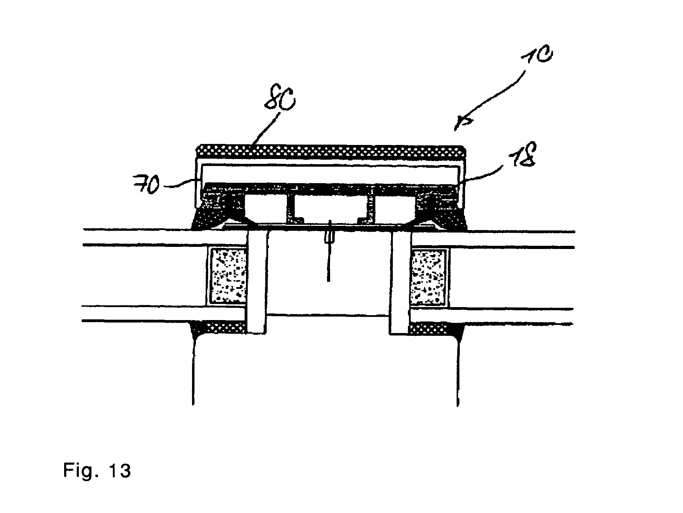

Auf gleiche Weise wie bei den Varianten gemäß Fig. 10 und Fig. 11 sind auch die Kantenelemente 70 der Varianten gemäß Fig. 12 und Fig. 13 befestigt. Das Dekorelement 80 ist hierbei allerdings flächig mit der Frontseite des Kantenelements 70 verklebt oder anderweitig befestigt. Während bei der Variante gemäß Fig. 12 die Seitenkanten des Dekorelements 80 von erhabenen Stegen des Kantenelements 70 abgedeckt sind, liegen die Seitenkanten des Dekorelements 80 der Variante gemäß Fig. 13 frei und bleiben sichtbar.

Die schematischen Schnittansichten der Figuren 14 bis 20 zeigen unterschiedliche Varianten einer Verkleidungsanordnung, bei denen jeweils Tür- bzw. Fensterelemente an ihren Außenseiten mit nicht erfindungsgemäßen Verkleidungsanordnungen abgedeckt sind.

Die Variante gemäß Fig. 14 verdeutlicht eine Fensterkonstruktion mit Hinterlüftung, bei der sowohl ein feststehender Fensterrahmen 84 als auch ein schwenkbarer Fensterflügel 86 jeweils an einer Außenseite mit einem Verkleidungselement 18 versehen ist, das über ein Profilelement 24 gemäß einer der zuvor beschriebenen Ausführungsformen lösbar am Fensterrahmen 84 bzw. am schwenkbaren Fensterflügel 86 montiert ist. An sichtbaren Schmalseiten der Verkleidungselemente 18 sind jeweils Kantenprofile 70 entsprechend einer der zuvor beschriebenen Ausführungsformen (vgl. Fig. 1, Fig. 2) montiert, die als sichtbare Dekorelemente dienen.

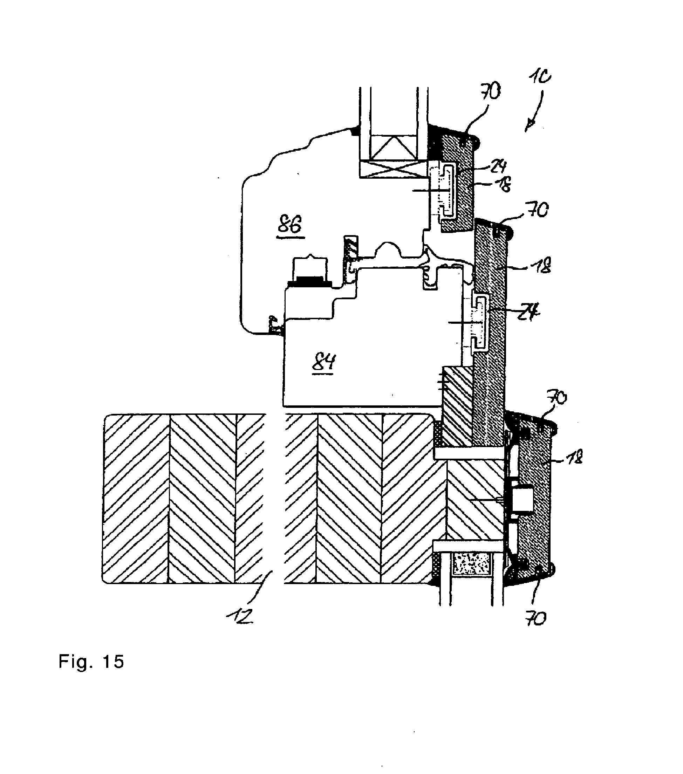

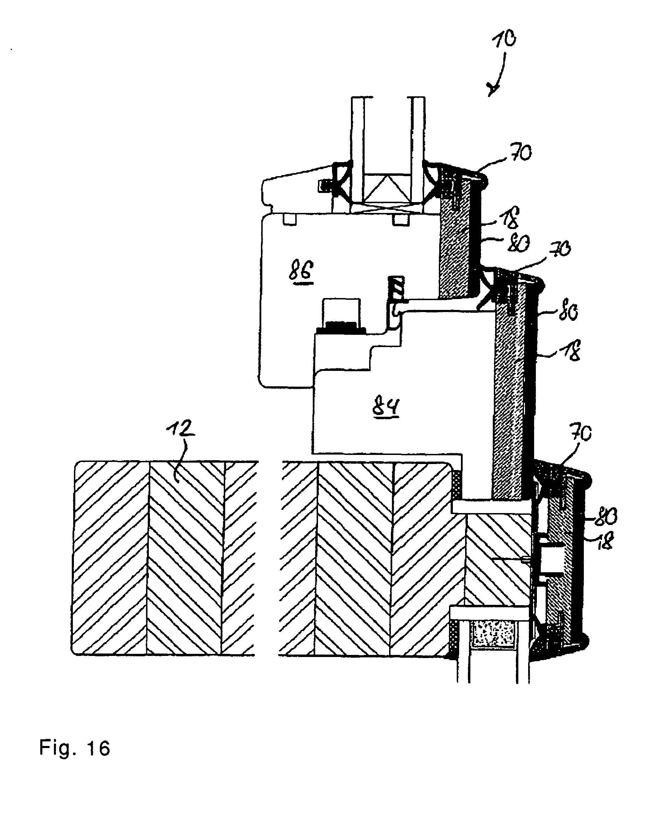

Die schematischen Darstellungen der Figuren 15 und 16 verdeutlichen Varianten einer Pfosten-Riegel-Konstruktion, die mit schwenkbaren Fensterelementen kombiniert sind. Auch hier sind an seitlichen Schmalseiten der Verkleidungselemente 18 jeweils Kantenprofile 70 angeordnet. Während bei der Variante gemäß Fig. 15 die Verkleidungselemente 18 jeweils mittels Profilelementen 24 lösbar an den Rahmenelementen 84, 86 befestigt sind, sind sie bei der alternativen Variante gemäß Fig. 16 teilweise flächig mit den Rahmenelementen 84, 86 verklebt. Eines der Verkleidungselemente 18, nämlich das an einem Pfosten 12 montierte, entspricht der bereits anhand der Fig. 3 erläuterten Variante. Zusätzlich sind die Verkleidungselemente 18 der Variante gemäß Fig. 16 mit aufgesetzten Dekorelementen 80 versehen, die jeweils von den Kantenprofilen 70 bzw. von Dichtleisten benachbarter Verkleidungselemente 18 gehalten und geklemmt sind.

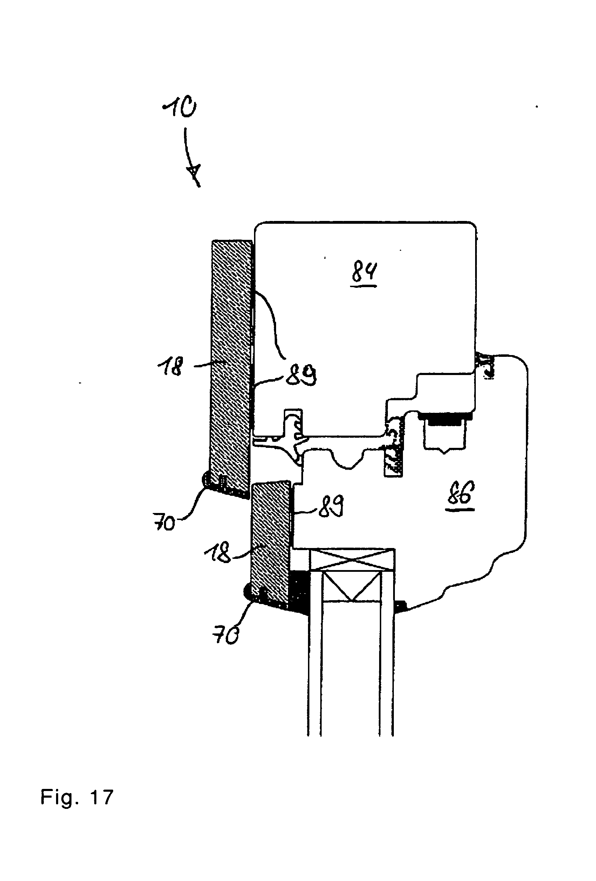

Die in Fig. 17 in schematischer Schnittdarstellung gezeigte Variante der Verkleidungsanordnung 10 unterscheidet sich von der Variante gemäß Fig. 14 lediglich dadurch, dass die Verkleidungselemente 18 ohne rückseitige Profilelemente an dem Fensterrahmen 84 bzw. -flügel 86 befestigt und stattdessen flächig daran verklebt sind, bspw. mittels einer Klebstoffschicht oder über geeignete Klebestreifen. Wahlweise kann jeweils zwischen Rückseite des Verkleidungselements 18 und dem Rahmenteil 84 bzw. 86 jeweils eine dämpfende Zwischenschicht 89 zur Verringerung der Bruchanfälligkeit des Verkleidungselements 18 und zum Ausgleich von Dehnungsbewegungen angeordnet sein. Diese Dämmschicht 89 kann bspw. aus einem geeigneten Gewebe aus glasfaserverstärktem Kunststoff o. dgl. bestehen.

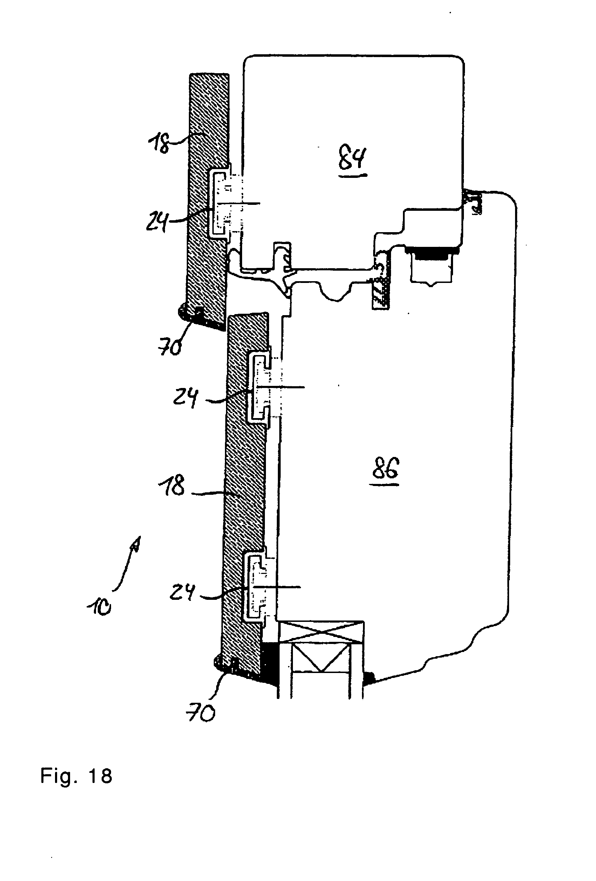

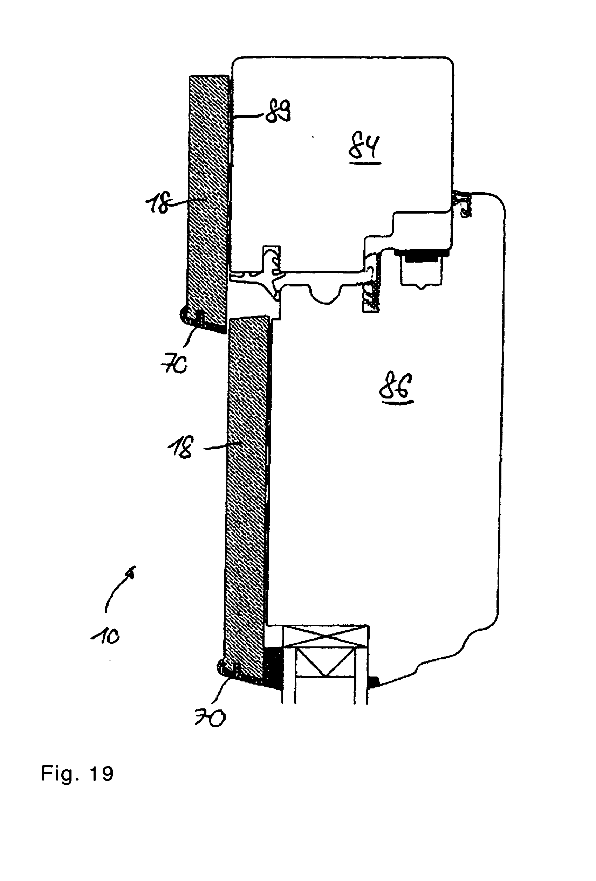

Die Varianten der Figuren 18 und 19 verdeutlichen jeweils Varianten, bei denen breitere Verkleidungselemente 18 wahlweise auch über mehrere Profilelemente 24 bzw. über breitere Klebeschichten am Fensterrahmen 84 montiert werden können. Durch die individuelle Gestaltungsmöglichkeit der Verkleidungselemente 18 können diese somit nahezu beliebig an die zu verkleidenden Flächen angepasst werden.

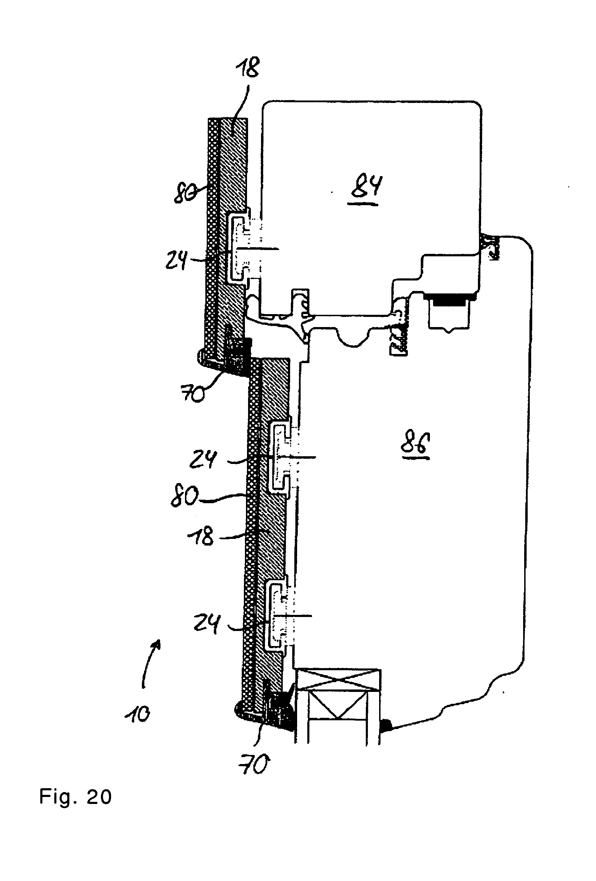

Die Variante gemäß Fig. 20 verdeutlicht eine Verkleidungsanordnung 10, die bspw. als Haustür-Verkleidung oder als Fenster-Verkleidung geeignet ist. An den Frontseiten der Verkleidungselemente 18 sind jeweils Dekorelemente 80 angebracht, die auf zuvor beschriebene Weise mittels seitlichen Kantenprofilen 70 gehalten sind. An der sichtbaren Längskante ist jeweils ein Kantenprofil 70 vorgesehen, mit dem das Dekorelement 80 an seinem Platz gehalten ist. An der teilweise von dem benachbarten Verkleidungselement 18 verdeckten Schmalseite kann dieses zum Klemmen des Dekorelements 80 genutzt werden, da die Verkleidungselemente 18 teilweise überlappend montiert sind. Die Rückseite des Kantenprofils 70 des überlappenden Verkleidungselements 18 kann somit zum Fixieren des Dekorelements 80 des benachbarten Verkleidungselements 18 eingesetzt werden, wie dies in Fig. 20 gezeigt ist.

Die Rückseiten der Verkleidungselemente 18 sind jeweils mittels Profilelementen 24 an den Türen- bzw. Rahmenteilen montiert.

Die schematische Schnittdarstellung der Fig. 21 zeigt eine Variante der Verkleidungsanordnung, bei der eine schwenkbare Haustür 90 sowie der Türpfosten 92, an der diese aufgehängt ist, jeweils mit einem Verkleidungselement 18 verkleidet ist. Am Türpfosten 92, der ggf. an eine Glasfläche 14 grenzen kann, ist eine Variante eines relativ breiten Verkleidungselementes 18 mittels zweier Profilschienen 24 lösbar befestigt, das an seinen beiden gegenüber liegenden Schmalseiten jeweils mit angeschrägten und nach vorne hin abgerundeten Kantenprofilen 70 versehen ist. Die Kantenprofile 70 dienen zusätzlich zur Verankerung eines Dekorelementes 80, das bspw. aus einem Keramikmaterial wie sog. Porzellankeramik, aus Kunststein oder aus einem nahezu beliebigen anderen Material bestehen kann, wie die zuvor bereits beschrieben wurde. Der Grundkörper des Verkleidungselementes 18 selbst kann bspw. aus einem geeigneten Holz- bzw. Zellstoff-Verbund-Werkstoff wie HPL o. dgl. bestehen. Die Kantenprofile 70 bestehen vorzugsweise aus einem Leichtmetall wie Aluminium, das ggf. eloxiert oder beschichtet sein kann, um einen gewünschten optischen Effekt zu erzielen. Weiterhin sind an den Rückseiten der Kantenprofile 70 jeweils Dichtleisten angeordnet, welche die hinterlüftet aufgehängten Verkleidungselemente 18 zur Glasfläche 14 sowie zur angrenzenden Haustür 90 abdichten.

Die Haustür 90 selbst kann ein Dekorelement 80 aufweisen, das Teile der Außenfront der Haustür 90 oder wahlweise auch die gesamte Fläche bedecken kann. Das Dekorelement 80 kann ebenfalls aus einem Keramikmaterial wie Porzellankeramik, aus Kunststein oder aus einem nahezu beliebigen anderen Material bestehen. Im dargestellten Ausführungsbeispiel ist das Dekorelement 80 vollflächig mit der Außenseite der Haustür 90 verklebt und bedeckt diese vollständig. Selbstverständlich sind auch Varianten möglich, bei denen mehrere einzelne Dekorelemente 80 beabstandet voneinander an der Außen- und/oder Innenseite der Haustür 90 angebracht sind.

Die schematische Darstellung der Fig. 22 zeigt eine alternative Variante einer schwenkbaren Haustür, bei welcher die Haustür 90 auf gleiche Weise wie in Fig. 21 gezeigt vollflächig mit einem Dekorelement 80 aus Porzellankeramik oder aus einem anderen geeigneten Dekormaterial bedeckt ist. Der Türpfosten 92 ist auf ähnliche Weise wie in Fig. 57 mit einem hinterlüfteten Verkleidungselement 18 versehen, das mittels eines Profilelements 24 lösbar am Türpfosten 92 verankert ist. Die Breite des Verkleidungselements 18 kann je nach Bedarf variieren. Die an die Haustür 90 grenzende Schmalseite des Verkleidungselements 18 ist mit einem Kantenprofil 70 versehen; die übrige Gestaltung der Verkleidungsanordnung 10 entspricht der Variante gemäß Fig. 21.

Die schematische Schnittansicht der Fig. 23 verdeutlicht eine Fassadengestaltung in einer Passivhaus-Ausführung, die u.a. für Fenster, Fenstertüren und/oder Haustüren o. dgl. geeignet ist. Ein Dekorelement 80 ist direkt und vollflächig auf einem Dämmelement 88 montiert, bspw. verklebt. Das Dekorelement 80 kann wahlweise eine abgeschrägte Kante aufweisen oder mit einem aufgeschobenen Kantenelement 70 verkleidet sein, das darüber hinaus eine Haltenut für eine Dichtleiste aufweisen kann, wie dies in Fig. 23 verdeutlicht ist.

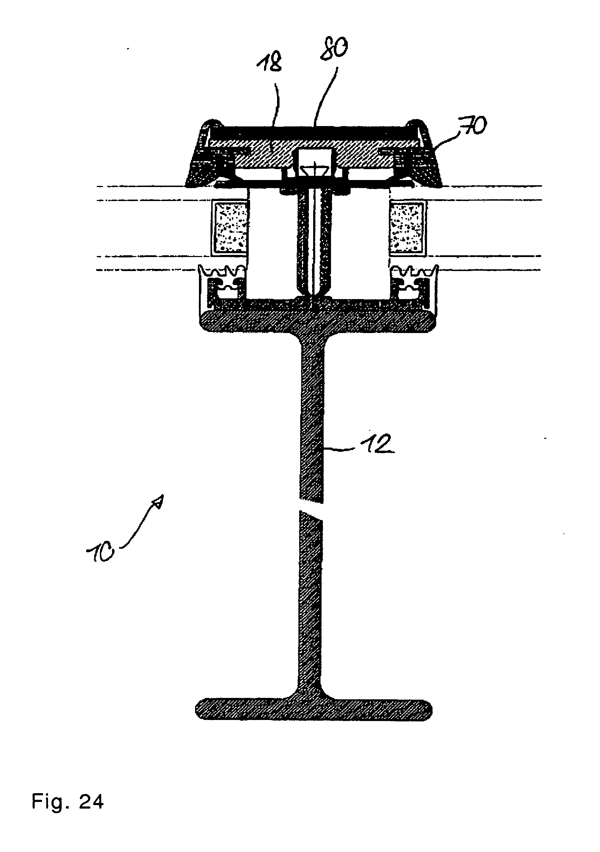

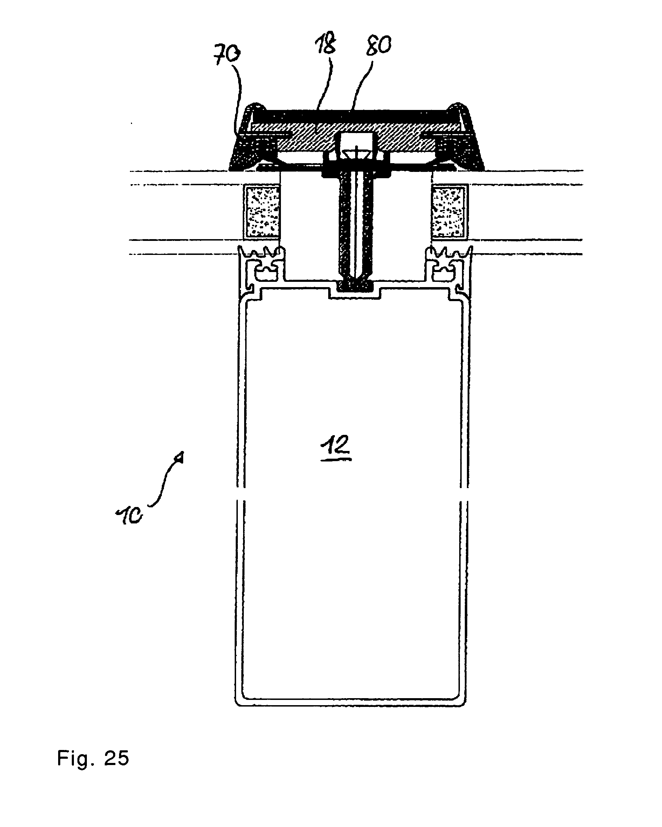

Die schematischen Darstellungen der Figuren 24 und 25 verdeutlichen jeweils Pfosten-Riegel-Konstruktionen mit Unterkonstruktionen aus Stahl (Fig. 24) bzw. aus Aluminium (Fig. 25). Der übrige Aufbau der Verkleidungsanordnung 10 entspricht weitgehend der Variante gemäß der Fig. 3 bzw. der Fig. 5.

### Bezugszeichenliste

- 10: Verkleidungsanordnung
- 12: Pfosten
- 121: Absatz
- 122: Trennabschnitt
- 123: Stirnseite
- 124: Verbindungszapfen
- 14: Glasflächen
- 141: innere Scheibe
- 142: äußere Scheibe
- 143: Distanzelement
- 16: Randabschnitt
- 18: Verkleidungselement
- 181: äußere Kante
- 182: Innenfläche / Rückseite
- 183: nutförmige Aufnahme
- 184: Dichtleiste
- 185: Klemmprofil
- 186: Klemmnut
- 187: Eckprofil
- 20: Federscheibe
- 201: Profilabschnitt
- 22: Dichtleiste
- 24: Profilelement
- 241: Absatz
- 26: Verbindungszapfen
- 261: Hakenelement
- 28: Doppel-T-Träger
- 281: Aufnahme
- 282: Trennabschnitt
- 30: Aluminium-Hohlprofil
- 301: Schmalseite
- 302: Trennabschnitt
- 32: Dichtungs-Klemmprofil
- 34: Dichtungs-Klemmprofil
- 36: Fenster-Rahmenabschnitt
- 38: Fenster-Rahmenabschnitt
- 40: Profilschiene
- 41: Rückseite
- 42: Befestigungsfläche
- 44: Basisabschnitt
- 45: Vorderseite
- 46: Befestigungssteg
- 48: Fußabschnitt
- 50: Hakenabschnitt
- 52: Anschlagsteg
- 54: Befestigungsbohrung
- 56: Verankerungssteg
- 58: Befestigungssteg
- 60: Nut
- 62: Nut
- 64: Dichtungselement
- 66: Nut
- 70: Kantenelement / Kantenprofil
- 72: Längssteg
- 74: Längsnut
- 76: Klemmnut
- 80: Dekorelement
- 82: Klemmleiste
- 84: Fensterrahmen
- 86: Fensterflügel
- 88: Dämmelement
- 89: Dämmschicht
- 90: Haustür
- 92: Türpfosten
- 94: Distanzelement
- 96: Glashaltefeder

## Patentansprüche

1. Verkleidungsanordnung (10), insbesondere zur Fassadengestaltung von Gebäuden, Gebäudewänden bzw. Gebäudeteilen wie Fenstern, Türen o. dgl., mit wenigstens einem flachen Verkleidungselement (18), das mit einer Rückseite (182) lösbar oder unlösbar an einer Oberfläche befestigbar ist, wobei das flache Verkleidungselement (18) im Wesentlichen aus einem Holz-Verbund-Werkstoff, aus einem Zellstoff-Verbund-Werkstoff, aus einem Kunststein- und/oder aus einem Keramikmaterial gefertigt ist, wobei das Verkleidungselement (18) eine gehärtete Oberflächenschicht aufweist und zumindest an einer seitlichen Schmalseite ein Kantenelement (70) aufweist, welches das Verkleidungselement (18) zumindest teilweise umfasst, und wobei eine Vorderseite des Verkleidungselements (18) mit einem lösbaren oder unlösbar verankerten Dekorelement (80) aus Metall, Kunststoff, Keramik, Stein, Holz oder einem anderen Dekormaterial verkleidet ist, **dadurch gekennzeichnet, dass** die Kantenelemente (70) mittels federnder Haltestege an entsprechend geformten Seitenkanten des Verkleidungselements (18) gehalten sind und das Dekorelement (80) zwischen frontseitigen Profilstegen des Verkleidungselements (18) und den seitlichen Kantenelementen (70) gehalten ist.

2. Verkleidungsanordnung nach Anspruch 1, **dadurch gekennzeichnet, dass** das Verkleidungselement (18) im Wesentlichen aus einem Hochdrucklaminat-Werkstoff (HPL) gebildet ist.

3. Verkleidungsanordnung nach Anspruch 1 oder 2, **dadurch gekennzeichnet, dass** das Verkleidungselement (18) flächig an der Oberfläche, an einem Gebäudepfosten (12), an dem Gebäudeteil bzw. an der Gebäudewand befestigt, insbesondere verklebt ist.

4. Verkleidungsanordnung nach einem der voranstehenden Ansprüche, **dadurch gekennzeichnet, dass** das Verkleidungselement (18) als massiver Formkörper und nahezu porenfrei ausgebildet und wie Holz bearbeitbar ist.

5. Verkleidungsanordnung nach einem der voranstehenden Ansprüche, **dadurch gekennzeichnet, dass** jeweils ein Kantenelement (70) an jeder von zwei gegenüber liegenden Längsseiten des Verkleidungselements (18) angeordnet ist und die Längskanten des Verkleidungselements (18) zumindest teilweise umfasst.

6. Verkleidungsanordnung nach einem der voranstehenden Ansprüche, **dadurch gekennzeichnet, dass** eine Frontseite und zumindest Teile der gegenüber liegenden Längsseiten des Verkleidungselements (18) von einem einstückig ausgebildeten Kantenelement (70) abgedeckt sind, das lösbar oder unlösbar am Verkleidungselement (18) montiert ist.

7. Verkleidungsanordnung nach einem der voranstehenden Ansprüche, **dadurch gekennzeichnet, dass** das Dekorelement (80) an einer Frontseite des Kantelements (70) bzw. der Kantelemente (70) angeordnet ist und dieses bzw. diese zumindest teilweise abdeckt.

## Claims

1. Cladding arrangement (10), especially for the design of facades of buildings, building side walls or building parts such as windows, doors or the like, comprising at least one flat cladding element (18), with a rear side (182), which can be removable or irremovable fixed to a surface, wherein the flat cladding element (18) is essentially made of a wood- composite- material, a cellulose-composite- material, an artificial stone material and / or a ceramic material, wherein the flat cladding element (18) comprises a hardened surface layer and wherein the flat cladding element (18) comprises an edge element (70) at least on one lateral narrow side, the edge element (70) at least partially enveloping the cladding element (18) and whereby a front side of the cladding element (18) is covered by a detachable or non- detachable decorative element (80) made from metal, plastics, ceramics, stone, wood or another decorative material, **characterized in that** the edge elements (70) are mounted to the respectively formed lateral edges of the cladding element (18) by means of resilient retaining bars and that the decorative element (80) is mounted between front facing profile bars of the cladding element (18) and the lateral edge elements (70).

2. Cladding arrangement according to claim 1, **characterized in that** the cladding element (18) is essentially made of a high- pressure laminate- material (HPL).

3. Cladding arrangement according to claim 1 or 2, **characterized in that** the cladding element (18) is mounted flat to a surface, to a building upright (12), to a part of a building or to a building side wall, in particular glued.

4. Cladding arrangement according to one of the previous claims, **characterized in that** the cladding element (18) is formed as solid and almost pore- free shaped body and that the cladding element (18) can be processed like wood.

5. Cladding arrangement according to one of the previous claims, **characterized in that** a respective edge element (70) is arranged on each of two opposite longitudinal sides of the cladding element (18), and that the respective edge elements (70) each envelope the respective longitudinal sides of the cladding element (18) at least partially.

6. Cladding arrangement according to one of the previous claims, **characterized in that** a front side and at least parts of the opposite longitudinal sides of the cladding element (18) are covered by an integrally formed edge element (70), which is mounted detachably or non- detachably to the cladding element (18).

7. Cladding arrangement according to one of the previous claims, **characterized in that** that the decorative element (80) is arranged on one front side of the edge element (70) or the edge elements (70), whereby the decorative element (80) is covering the edge element (70) or the edge elements (70) completely or whereby the decorative element (80) is covering the edge element (70) or the edge elements (70) at least partially.

## Revendications

1. Ensemble de revêtement (10), en particulier pour l'aménagement de façades de bâtiments, de murs de bâtiments ou bien de parties de bâtiments telles que fenêtres, portes ou similaire, comprenant au moins un élément plat de revêtement (18) qui est apte à être fixé de manière amovible ou inamovible par une face arrière (182) sur une surface, ledit élément plat de revêtement (18) étant réalisé pour l'essentiel dans un matériau composite de bois, dans un matériau composite de pâte chimique, dans un matériau de pierre artificielle et/ou de céramique, ledit élément de revêtement (18) présentant une couche superficielle durcie et comprenant, au moins sur un petit côté latéral, un élément de bord (70) qui embrasse au moins en partie ledit élément de revêtement (18), et une face avant dudit élément de revêtement (18) étant revêtue d'un élément de décoration (80) en métal, matière plastique, céramique, pierre, bois ou en un autre matériau de décoration, qui est ancré de manière amovible ou inamovible, **caractérisé par le fait que** les éléments de bord (70) sont maintenus au moyen d'entretoises de maintien faisant ressort sur des bords latéraux de l'élément de revêtement (18), qui sont formés de manière correspondante, et que ledit élément de décoration (80) est maintenu entre des entretoises profilées frontales de l'élément de revêtement (18) et lesdits éléments latéraux de bord (70).

2. Ensemble de revêtement selon la revendication 1, **caractérisé par le fait que** ledit élément de revêtement (18) est réalisé pour l'essentiel dans un matériau de stratifié haute pression (HPL).

3. Ensemble de revêtement selon la revendication 1 ou 2, **caractérisé par le fait que** ledit élément de revêtement (18) est fixé en nappe, en particulier par collage, sur la surface, sur un poteau de bâtiment (12), sur la partie du bâtiment ou bien sur le mur du bâtiment.

4. Ensemble de revêtement selon l'une quelconque des revendications précédentes, **caractérisé par le fait que** ledit élément de revêtement (18) est réalisé en tant que corps moulé massif et est presque exempt de pores et se laisse travailler comme le bois.

5. Ensemble de revêtement selon l'une quelconque des revendications précédentes, **caractérisé par le fait que** respectivement un élément de bord (70) est disposé sur chacun de deux grands côtés opposés de l'élément de revêtement (18) et embrasse au moins en partie les bords longitudinaux de l'élément de revêtement (18).

6. Ensemble de revêtement selon l'une quelconque des revendications précédentes, **caractérisé par le fait qu'**une face frontale et au moins des parties des grands côtés opposés de l'élément de revêtement (18) sont recouverts par un élément de bord (70) réalisé d'un seul tenant qui est monté de manière amovible ou inamovible sur ledit élément de revêtement (18).

7. Ensemble de revêtement selon l'une quelconque des revendications précédentes, **caractérisé par le fait que** ledit élément de décoration (80) est disposé sur une face frontale de l'élément de bord (70) ou bien des éléments de bord (70) et recouvre celui-ci ou bien ceux-ci au moins en partie.
